# EUROPÄISCHE PATENTSCHRIFT

(11) **EP 1 663 777 B1**
(45) Veröffentlichungstag und Bekanntmachung des Hinweises auf die Patenterteilung: **28.11.2007**
(21) Anmeldenummer: 04763825.9
(22) Anmeldetag: 05.08.2004
(51) Int. Cl.: B64C 9/16, B64C 7/00

(54) **TRAGSTRUKTUR FÜR EINE EIN- UND AUSFAHRBARE KLAPPE UND DEREN VERWENDUNG**
SUPPORT STRUCTURE FOR A RETRACTABLE AND EXTENDABLE FLAP, AND USE OF SAID STRUCTURE
STRUCTURE PORTEUSE POUR UN VOLET, POUVANT ETRE RENTRE ET SORTI, ET UTILISATION DE LADITE STRUCTURE

(30) Priorität: 25.08.2003 DE 10339030
(43) Veröffentlichungstag der Anmeldung: 07.06.2006
(73) Patentinhaber: MT Aerospace AG, 86153 Augsburg (DE)
(72) Erfinder: PATZELT, Aicke, 86157 Augsburg (DE); REIPRICH, Michael, 86153 Augsburg (DE); STEGMAIER, Gunther, 8320 Fehraltorf (CH); WIGLEMA, Wietse, 2313 GN Leiden (NL)
(74) Vertreter: Grape, Knut
(86) Internationale Anmeldenummer: PCT/EP2004/008784
(87) Internationale Veröffentlichungsnummer: WO 2005/021375

(56) Entgegenhaltungen:
- EP-A- 0 838 394
- DE-A- 19 637 483
- US-A- 3 768 760
- US-A- 4 854 528
- US-B1- 6 432 507

## Beschreibung

Die vorliegende Erfindung betrifft eine Tragstruktur für eine ein- und ausfahrbare Klappe, die einem Gegenstand zugeordnet ist, welcher von einem Fluid umströmt ist, und deren Verwendung.

Derartige Tragstrukturen sind allgemein bekannt. Gemäß bisherigem Stand der Technik sind solche Tragstrukturen beispielsweise für Lande- bzw. Hinterkantenklappen bzw. Flaps von Verkehrs- und Transportflugzeugen, welche an deren Tragflügeln angebracht sind, anzutreffen. Die Landeklappen-Tragstrukturen bzw. Flap Supports sind zum Ein- bzw. Ausfahren der Landeklappen bei Start und Landung als Hochauftriebshilfen vorgesehen. Solche Landeklappen-Tragstrukturen bestehen zum Beispiel aus einem Gehäuse mit einem einteiligen, C-förmig ausgebildeten Querschnitt aus Aluminiumguss, dessen Seitenwände mittels Rippen verstärkt sind. In der DE 41 07 556 C1, der EP 0 838 394 A2 und der US-PS 4,854,528 sind solche Landeklappen-Tragstrukturen beispielhaft beschrieben. Derartige Landeklappen-Tragstrukturen haben sich in der Praxis jedoch sämtlich aufgrund deren konstruktiver Ausgestaltung als ausgesprochen nachteilig erwiesen. Zum einen besitzen derartige Landeklappen-Tragstrukturen einen unzulässig hohen Luftwiderstand und sind daher zusätzlich von einer aerodynamisch günstigen Verkleidung bzw. Fairing umgeben. Zum anderen bestehen derartige Landeklappen-Tragstrukturen nicht zuletzt hieraus resultierend aus einer Vielzahl von zusätzlichen Bauteilen, weisen damit einhergehend ein erhöhtes Gewichtsaufkommen auf und sind verhältnismäßig großbauend, was sich wiederum auf den Luftwiderstand und somit auf den Treibstoffverbrauch des Flugzeuges insgesamt ungünstig auswirkt.

Der vorliegenden Erfindung liegt daher die Aufgabe zugrunde, eine Tragstruktur für eine ein- und ausfahrbare Klappe, die einem Gegenstand zugeordnet ist, welcher von einem Fluid umströmt ist, zur Verfügung zu stellen, mit welcher sich die obigen Nachteile verhindern lassen, welche mithin konstruktiv besonders einfach, zugleich kompakt und stabil ist, damit einhergehend ein verhältnismäßig geringes Gewicht aufweist und ausgesprochen kleinbauend ist sowie eine erhebliche Reduzierung von Strömungswiderstand und somit Treibstoffverbrauch, zum Beispiel von Flugzeugen, ermöglicht, und deren Verwendung bereitzustellen.

Diese Aufgabe wird in vorrichtungstechnischer Hinsicht auf überraschend einfache Weise durch die Merkmale des Anspruchs 1 gelöst.

Durch die Ausgestaltung der erfindungsgemäßen Tragstruktur für eine ein- und ausfahrbare Klappe, die einem Gegenstand zugeordnet ist, welcher von einem Fluid umströmt ist, dadurch gekennzeichnet, dass die Tragstruktur ein Schalenprofil ist, das mindestens einen Teil der auf die Klappe wirkenden Kräfte aufnimmt und auf den Gegenstand überträgt, das außenseitig eine fluid-/aerodynamisch widerstandsarme Form aufweist und das innenseitig einen Raum zur wenigstens teilweisen Aufnahme einer Vorrichtung zum Ein- und Ausfahren der Klappe bildet, wird eine besonders einfache, zudem kompakte und stabile Bauweise der Tragstruktur selbst erreicht. So ist das Schalenprofil einerseits außenseitig fluid-/aerodynamisch optimiert und weist andererseits innenseitig einen Raum bzw. ein Volumen bzw. einen Bauraum auf, in welchem die Vorrichtung zum Ein- und Ausfahren der Klappe entweder vollständig oder gegebenenfalls nur teilweise einschließlich der kinematischen Führungseinrichtung bzw. Kinematik und/oder der Antriebseinrichtung bzw. Aktuatorik integral aufnehmbar bzw. unterbringbar ist. Auch lassen sich sämtliche Strukturelemente, wie zum Beispiel Beschläge, Lagerpunkte, Stringer oder Rippen, zur Aussteifung und/oder Befestigung der erfindungsgemäßen Tragstruktur an dem Gegenstand, beispielsweise an einem Tragflügel eines Flugzeuges, ohne weiteres in dem Schalenprofil selbst integrieren. Mithin weist die erfindungsgemäße Tragstruktur eine weitaus geringere Anzahl von Bauteilen auf. Insbesondere ist auch eine gesonderte fluid-/aerodynamisch geformte Verkleidung, wie zum Beispiel bei bisherigen Landeklappen-Tragstrukturen, nicht weiter notwendig. Die erfindungsgemäße Tragstruktur zeichnet sich mithin durch die Integration von verschiedenen Funktionen, wie fluid-/aerodynamischen und strukturmechanischen Faktoren, in einer einzigen Baueinheit aus, für die bisher eine Vielzahl von Bauteilen erforderlich war. Damit einhergehend lassen sich Gewicht und Querschnitt der erfindungsgemäßen Tragstruktur erheblich verringern. Hierdurch wiederum werden der Strömungswiderstand der erfindungsgemäßen Tragstruktur und damit zum Beispiel in der Luftfahrt der Treibstoffverbrauch von Flugzeugen insgesamt merklich verkleinert. Nicht zuletzt aus dem Zusammenspiel vorgenannter Vorteile ermöglicht die erfindungsgemäße Tragstruktur ein wesentlich verbessertes und optimiertes Design. Durch Verminderung von Gewicht und Baugröße ist eine erhöhte Vielseitigkeit bei Realisierung verschiedener Bauweisen, beispielsweise auch unter Einbeziehung sämtlicher gängigen Antriebseinrichtungen bzw. Aktuatoriken realisierbar. Schließlich besitzt die erfindungsgemäße Tragstruktur aufgrund redundanter Lastpfade noch den besonderen Vorteil einer erhöhten Ausfallsicherheit bzw. Fail Safe und Schadenstoleranz bzw. Damage Tolerance.

Weitere vorteilhafte Einzelheiten der erfindungsgemäßen Tragstruktur sind in den Ansprüche 2 bis 28 beschrieben.

Von ganz besonders großer Bedeutung für die Aufrechterhaltung der Funktion der Klappe an dem von dem Fluid umströmten Gegenstand, beispielsweise eine Landeklappe an dem Tragflügel eines Flugzeuges, ist das außenseitig fluid-/aerodynamisch geformte Schalenprofil nach Anspruch 2 zweiteilig ausgebildet.

Dabei umfasst das außenseitig fluid-/aerodynamisch geformte Schalenprofil nach den Merkmalen des Anspruchs 3 vorzugsweise eine Vorderschale und eine Hinterschale, die gegen die Strömungsrichtung des Fluids und hintereinander angeordnet sind.

Um jeglichen zusätzlichen fluid-/aerodynamischen Strömungswiderstand im Bereich der Trennstelle auszuschließen, zumindest möglichst klein zu halten, bilden die Vorderschale und die Hinterschale des außenseitig fluid-/aerodynamisch geformten Schalenprofils, in eingefahrenem Zustand der Klappe, nach Anspruch 4, eine strömungstechnische Einheit.

Vorzugsweise sind die Vorderschale und die Hinterschale des außenseitig fluid-/aerodynamisch geformten Schalenprofils nach Anspruch 5 entsprechend dem ein- bzw. ausgefahrenen Zustand der Klappe zueinander relativ bewegbar.

Weiterhin liegt es im Rahmen der Erfindung, entsprechend den Merkmalen des Anspruchs 6, die Vorderschale des außenseitig fluid-/aerodynamisch geformten Schalenprofils an dem Gegenstand und die Hinterschale dessen an der Klappe zu befestigen.

Zweckmäßigerweise ist/sind die Vorderschale und/oder die Hinterschale des außenseitig fluid-/aerodynamisch geformten Schalenprofils in diesem Zusammenhang nach Anspruch 7 über diskrete oder kontinuierliche Beschläge oder dergleichen Befestigungselemente an dem Gegenstand bzw. an der Klappe befestigt.

Alternativ oder kumulativ dazu ist/sind die Vorderschale und/oder die Hinterschale des außenseitig fluid-/aerodynamisch geformten Schalenprofils entsprechend den Maßnahmen des Anspruchs 8 über linienförmig und/oder flächig ausgebildete Beschläge oder dergleichen Befestigungselemente an dem Gegenstand bzw. an der Klappe angebracht.

Von besonderem Interesse für eine Verkleinerung der Bauhöhe der erfindungsgemäßen Tragstruktur und eine Verminderung ihres Strömungs- bzw. Luftwiderstands insgesamt sind die Maßnahmen des Anspruchs 9. Danach sind die Beschläge oder dergleichen Befestigungselemente innerhalb des Raumes zur wenigstens teilweisen Aufnahme der Vorrichtung zum Ein- bzw. Ausfahren der Klappe angeordnet.

Weiterhin liegt es im Rahmen der Erfindung, die Vorderschale und/oder die Hinterschale des außenseitig fluid-/aerodynamisch geformten Schalenprofils gemäß Anspruch 10 ein- oder mehrzellig auszubilden. Einerseits lässt sich auf diese Weise zusätzlich eine Gewichtsersparnis erreichen. Andererseits ist damit eine hohe Schadenstoleranz und Stabilität der erfindungsgemäßen Tragstruktur insgesamt sichergestellt.

Für eine weitergehende Gewichtsoptimierung der erfindungsgemäßen Tragstruktur sind die Maßnahmen des Anspruchs 11 von besonderem Interesse, wonach die Vorderschale und/oder die Hinterschale des außenseitig fluid-/aerodynamisch geformten Schalenprofils durchgehend oder partiell in Sandwich-Bauweise und/oder Verbund-Bauweise ausgebildet ist/sind.

Zur Verbesserung der Stabilität und Kompaktheit der erfindungsgemäßen Tragstruktur tragen des Weiteren die Merkmale des Anspruchs 12 bei. Demnach ist/sind die Vorderschale und/oder die Hinterschale des außenseitig fluid-/aerodynamisch geformten Schalenprofils mit Aussteifungen, insbesondere Längs- oder Querversteifungen, versehen. Bei diesen kann es sich beispielsweise um Aufdickungen, Dopplern, Profilen, Rippen oder Spanten handeln.

In bevorzugter Weise sind die Aussteifungen, insbesondere Längs- und/oder Querversteifungen, in diesem Zusammenhang nach Anspruch 13 innerhalb des Raumes zur wenigstens teilweisen Aufnahme der Vorrichtung zum Ein- bzw. Ausfahren der Klappe anordenbar. Auf diese Weise bleibt der besonders günstige Strömungswiderstand der erfindungsgemäßen Tragstruktur unbeeinflusst.

Weiterhin liegt es im Rahmen der Erfindung, dass die Vorderschale und/oder die Hinterschale des außenseitig fluid-/aerodynamisch geformten Schalenprofils entsprechend den konstruktiven Merkmalen des Anspruchs 14 aus einer im Wesentlichen U-förmig ausgebildeten Außenschale und von der Außenschale aufgenommenen Seiten- und/oder Innen- und/oder Zwischenwänden sowie gegebenenfalls einem Abschlussdeckel gebildet ist/sind.

Um Inspektionen, Wartungen und Reparaturen sowie Montagen bzw. Demontagen der in dem Raum des Schalenprofils untergebrachten Vorrichtung zum Ein- und Ausfahren der Klappe zu erleichtern, ist/sind die Vorderschale und/oder Hinterschale des außenseitig fluid-/aerodynamisch geformten Schalenprofils nach Anspruch 15 mit wenigstens einer Öffnung versehen, die durch einen Deckel oder dergleichen Handlochverschluss verschließbar ist.

In bevorzugter Weise besteht/bestehen die Vorderschale und/oder die Hinterschale des außenseitig fluid-/aerodynamisch geformten Schalenprofils entsprechend den Maßnahmen des Anspruchs 16 jeweils vollständig oder teilweise aus Kunststoff, insbesondere faserverstärktem Kunststoff, und/oder Faserverbundwerkstoff und/oder metallischem Werkstoff, insbesondere Stahl, Titan, Aluminium oder eine Legierung daraus, und/oder einer Kombination daraus. Für eine Tragstruktur nach der Erfindung bieten sich beispielsweise hinsichtlich einer Gewichtsoptimierung Faserverbundwerkstoffe an, die nach sämtlichen gängigen Fertigungsverfahren, wie Handlaminat, Prepreg, Harz-Infusion, Harz-Injektion inklusive geklebter bzw. gebolzter Fügungen etc., verarbeitet werden können. Grundsätzlich kann die erfindungsgemäße Tragstruktur auch aus metallischen Werkstoffen hergestellt sein, wobei Fertigungsverfahren wie etwa Streckziehen von Blechen, Feinguss, Schweißen, Nieten oder Kleben, gängig und bevorzugt sind. Schließlich ist es auch im Schadensfall von besonderem Vorteil, dass Reparaturen ohne Demontage unmittelbar am Gegenstand, beispielsweise am Flugzeug, ermöglicht sind. Man spricht in diesem Fall von sogenannten In-Field-Repair-Arbeiten, die sich designmäßig und durch Auswahl gängiger Werkstoffe sowie von entsprechend ausgewählten Fertigungsverfahren vereinfachen lassen.

Die Merkmale des Anspruchs 17 dienen der Vermeidung elektrostatischer Aufladungen der erfindungsgemäßen Tragstruktur infolge Reibung oder Blitzschlages. Danach ist/sind die Vorderschale und/oder die Hinterschale des außenseitig fluid-/aerodynamisch geformten Schalenprofils mit einer elektrisch leitenden und/oder antistatisch wirkenden Beschichtung überzogen. Diese Maßnahmen sind insbesondere bei Verwendung von Faserverbundwerkstoffen oder anderen nicht-leitenden Materialien von Vorteil, wobei leitende Oberflächenschichten, zum Beispiel Metall-Mesh oder Antistatiklack, aufbringbar sind.

In alternativer oder kumulativer Ausgestaltung der Erfindung ist/sind die Vorderschale und/oder die Hinterschale des außenseitig fluid-/aerodynamisch geformten Schalenprofils nach Anspruch 18 mit einer Beschichtung überzogen, welche gegen Stoß- und/oder Schlagbelastungen, beispielsweise infolge eines Streifens mit Fremdobjekten, wie Vögelschwärmen etc., unempfindlich sind.

Um darüber hinaus kritische Schäden infolge eines Zusammenstoßes mit solchen Fremdobjekten frühzeitig und vor allem zuverlässig erkennen zu können, ist erfindungsgemäß weiterhin vorgesehen, die Vorderschale und/oder die Hinterschale des außenseitig fluid-/aerodynamisch geformten Schalenprofils nach Anspruch 19 mit einer Beschichtung zu versehen, welche Oberflächenveränderungen bzw. -beschädigungen sichtbar macht, beispielsweise im Rahmen von Sichtkontrollen vor dem Start eines Flugzeuges. Bei solchen Sichtkontrollen lassen sich ohne weiteres Veränderungen und/oder sogar Beschädigungen der Oberflächenbeschaffenheit des Schalenprofils, speziell auch eines auf das Schalenprofil aufgetragenen Lackes, ermitteln.

Denkbar ist in diesem Zusammenhang auch der Einsatz einer zerstörungsfreien Werkstoffprüfung oder eines sogenannten Health-Monitoring-Systems.

Von ganz besonderer Bedeutung für eine einfache, zugleich kompakte sowie zuverlässige Bauweise der gesamten Tragstruktur nach der Erfindung sind die Maßnahmen des Anspruchs 20. Demnach umfasst die in dem Raum bzw. Volumen bzw. Bauraum des außenseitig fluid-/aerodynamisch geformten Schalenprofils untergebrachte Vorrichtung zum Ein- und Ausfahren der Klappe einerseits eine kinematische Führungseinrichtung bzw. Kinematik und andererseits wenigstens teilweise eine Antriebseinrichtung bzw. Aktuatorik.

In diesem Zusammenhang ist die kinematische Führungseinrichtung bzw. Kinematik in vorteilhafter Weise entsprechend Anspruch 21 mit einer Führungsschiene, die der Vorderschale zugeordnet ist, und einem Rollenwagen, der auf der Führungsschiene hin- und herverfahrbar ist, versehen. Zudem weist die kinematische Führungseinrichtung bzw. Kinematik ein Anschlusselement, das an der Klappe befestigt und an dem Rollenwagen angelenkt ist, und einen Steuerhebel, der jeweils mit der Vorderschale und der Klappe gelenkig verbunden ist, auf.

Zweckmäßigerweise ist die der Vorderschale zugeordnete Führungsschiene mit der Vorderschale nach Anspruch 22 lösbar bzw. nach Anspruch 23 kraft- und/oder formschlüssig verbunden.

Entsprechend Anspruch 24 ist vorzugsweise vorgesehen, dass die der Vorderschale zugeordnete Führungsschiene aus Metall, insbesondere aus hochvergütetem Werkstoff, beispielsweise nach DIN 10083, oder verschleißfestem Stahl, vorzugsweise aus Titan oder einer Titanlegierung, besteht.

Von besonderem Interesse für eine einfache, zugleich kompakte sowie zuverlässige Bauweise der Tragstruktur nach der Erfindung insgesamt sind ebenfalls die Maßnahmen des Anspruchs 25, dass nämlich die Antriebseinrichtung bzw. Aktuatorik ein Antriebselement bzw. einen Aktuator und eine Antriebsstange, die jeweils mit dem Antriebselement bzw. Aktuator und dem Anschlusselement der Klappe gelenkig verbunden ist, umfasst.

Grundsätzlich ist es, wie in Anspruch 26 ausgedrückt, erfindungsgemäß vorgesehen, das Antriebselement bzw. den Aktuator der Antriebseinrichtung bzw. Aktuatorik in dem Raum des außenseitig fluid-/aerodynamisch geformten Schalenprofils zu integrieren. Alternativ dazu ist es jedoch ebenso denkbar, dass das Antriebselement bzw. den Aktuator der Antriebseinrichtung bzw. Aktuatorik nach Anspruch 27 auch außerhalb des Schalenprofils befestigt ist. Beispielsweise könnte das Antriebselement bzw. der Aktuator an dem von dem Fluid umströmten Gegenstand, zum Beispiel einem Tragflügel eines Flugzeuges, gelagert sein.

Des Weiteren liegt es im Rahmen der Erfindung, die erfindungsgemäße Tragstruktur noch weitergehend zu optimieren, dahingehend, als nach Anspruch 28 mindestens ein zusätzliches Subsystem bzw. wenigstens eine weitere Einrichtung, insbesondere ein Kraftstoff-Notablass oder Jettisson-System oder eine Ram-Air-Turbine, innerhalb des Raumes zur wenigstens teilweisen Aufnahme der Vorrichtung zum Ein- und Ausfahren der Klappe installierbar ist/sind.

Schließlich liegt es noch im Rahmen der Erfindung, die Tragstruktur nach Anspruch 29 für eine an einem Tragflügel eines Flugzeuges angeordnete Landeklappe oder Hinterkantenklappe zu verwenden. Als besonders vorteilhaft hat sich auch die Verwendung der erfindungsgemäßen Tragstruktur für eine vergleichbare Klappe eines U-Bootes, eines Luftkissenfahrzeuges oder Hovercraft oder eines sonstigen Fluggerätes der Luft- und Raumfahrt erwiesen. Schließlich eignet sich die erfindungsgemäße Tragstruktur auch bevorzugt für eine entsprechende Klappe eines flexiblen Strömungsgleichrichters in einem Wasser-/Wind-kanal.

Weitere Merkmale, Vorteile und Einzelheiten der Erfindung ergeben sich aus der nachfolgenden Beschreibung einer bevorzugten Ausführungsform der Erfindung sowie anhand der Zeichnungen. Hierbei zeigen:
- Fig. 1: eine schematische Seitenansicht einer Ausführungsform einer erfindungsgemäßen Tragstruktur zusammen mit einer Lande- bzw. Hinterkantenklappe an einem Tragflügel eines Flugzeuges in eingefahrenem Zustand bzw. in Reiseflugkonfiguration,
- Fig. 2: eine schematische, auseinandergezogene Längsschnittansicht durch die Ausführungsform der erfindungsgemäßen Tragstruktur entsprechend der Fig. 1, ohne Lande- bzw. Hinterkantenklappe,
- Fig. 3: eine Querschnittsansicht durch die Ausführungsform der erfindungsgemäßen Tragstruktur längs der Linie III-III in der Fig. 2,
- Fig. 4: eine Querschnittsansicht durch die Ausführungsform der erfindungsgemäßen Tragstruktur längs der Linie IV-IV in der Fig. 2,
- Fig. 5: eine Querschnittsansicht durch die Ausführungsform der erfindungsgemäßen Tragstruktur längs der Linie V-V in der Fig. 2,
- Fig. 6: eine Querschnittsansicht durch die Ausführungsform der erfindungsgemäßen Tragstruktur längs der Linie VI-VI in der Fig. 2,
- Fig. 7: eine Längsschnittansicht durch die Ausführungsform der erfindungsgemäßen Tragstruktur längs der Linie VII-VII in der Fig. 2,
- Fig. 8: eine schematische Seitenansicht der Ausführungsform der erfindungsgemäßen Tragstruktur für eine Lande- bzw. Hinterkantenklappe an einem Tragflügel eines Flugzeuges entsprechend der Fig. 1 in teilweise ausgefahrenem Zustand bzw. in Start- oder Fowlerkonfiguration, und
- Fig. 9: eine schematische Seitenansicht der Ausführungsform der erfindungsgemäßen Tragstruktur für eine Lande- bzw. Hinterkantenklappe an einem Tragflügel eines Flugzeuges entsprechend der Fig. 1 in vollständig ausgefahrenem Zustand bzw. in Landekonfiguration.

Bei der nachfolgenden Beschreibung einer Ausführungsform einer erfindungsgemäßen Tragstruktur 10 für eine Klappe 12, die einem von einem Fluid umströmten Gegenstand 14 zugeordnet und ein- sowie ausfahrbar ist, sind einander entsprechende, gleiche Bauteile jeweils mit identischen Bezugsziffern versehen.

Die erfindungsgemäße Tragstruktur 10 lässt sich in vorteilhafter Weise für eine Klappe 12 in Form einer Landeklappe oder Hinterkantenklappe verwenden, die an einem Gegenstand in Form eines Tragflügels 14 eines Flugzeuges oder sonstigen Luft-/Wasserfahrzeuges beliebiger Art angeordnet ist. In diesem Zusammenhang hat es sich in besonderem Maße als vorteilhaft herausgestellt, die Tragstruktur 10 nach der Erfindung für zivile und militärische Verkehrs- sowie Transportflugzeuge einzusetzen.

Gleichermaßen ist die erfindungsgemäße Tragstruktur 10 zur Verwendung für jede beliebige von einem Fluid umströmte Klappe gleicher oder ähnlicher Klappenkinematik insbesondere eines U-Bootes, eines Luftkissenfahrzeuges (Hovercraft) oder eines Fluggerätes der Luft- und Raumfahrt geeignet. Die erfindungsgemäße Tragstruktur 10 lässt sich darüber hinaus nicht nur in dynamischen Systemen, sondern ebenso gut in statischen Systemen, wie zum Beispiel für einen flexiblen Strömungsgleichrichter in einem Wasser-/Windkanal, oder ähnlichem einsetzen.

Der Einfachheit halber wird die erfindungsgemäße Tragstruktur 10, die für eine Klappe 12 vorgesehen ist, welche einem von einem Fluid umströmten Gegenstand 14 zugeordnet und ein- sowie ausfahrbar ist, nachfolgend anhand einer Landeklappe eines Flugzeuges beschrieben. Bei dem Ausführungsbeispiel einer erfindungsgemäßen Tragstruktur 10 handelt es sich mithin um eine sogenannte "Landeklappen-Tragstruktur" bzw. einen Flap Support. Insoweit werden auch die sehr allgemeinen Formulierungen "Klappe" und "Gegenstand" bei dem dargestellten Ausführungsbeispiel im Sinne der technischen Begriffe "Landeklappe", "Hinterkantenklappe" oder Flap und "Flügel" bzw. "Tragflügel" eines Flugzeuges verwendet, ohne die Erfindung hierauf zu beschränken.

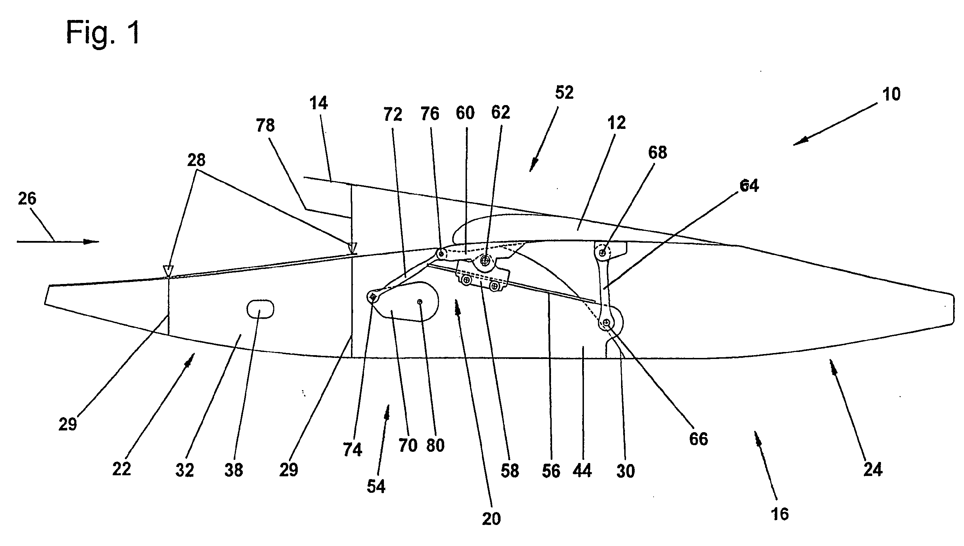

Die erfindungsgemäße Tragstruktur 10 umfasst entsprechend den Fig. 1 bis 9 ein Schalenprofil 16.

Außenseitig weist das Schalenprofil 16 eine fluid-/aerodynamische Form auf. Mithin besitzt das Schalenprofil 16 einen ausgesprochen geringen fluid- bzw. aerodynamischen Strömungswiderstand, d.h. bei der beschriebenen Ausführungsform der erfindungsgemäßen Tragstruktur 10 einen ausgesprochen geringen aerodynamischen Luftwiderstand.

Innenseitig umschließt das Schalenprofil 16 einen Raum oder dergleichen Volumen bzw. Bauraum oder sonstigen Hohlraum 18. Der Raum 18 nimmt wenigstens teilweise eine Vorrichtung 20 auf, welche dem Ein- und Ausfahren der Landeklappe 12 dient. In bevorzugter Weise ist dabei die gesamte mechanische Architektur, wie unter anderem die Vorrichtung zum Ein- und Ausfahren der Landeklappe 12, sonstige Strukturelemente, zum Beispiel Beschläge, Lagerpunkte, Stringer oder Rippen, etc. in dem Raum 18 integral untergebracht.

Das Schalenprofil 16 ist zweiteilig ausgebildet. So weist das Schalenprofil 16 eine Vorderschale 22 und eine Hinterschale 24 auf. Die Vorderschale 22 und die Hinterschale 24 sind gegen die Strömungsrichtung des Fluids (Pfeil 26) und hintereinander angeordnet.

Die Vorderschale 22 und die Hinterschale 24 des Schalenprofils 16 sind entsprechend dem ein- bzw. ausgefahrenen Zustand der Landeklappe 12 zueinander relativ bewegbar. Die Vorderschale 22 des Schalenprofils 16 und damit die gesamte Tragstruktur 10 nach der Erfindung sind dabei an dem Gegenstand bzw. Tragflügel 14 über Lagerungspunkte 28 befestigt, denen vordere bzw. hintere Krafteinleitungsrippen 29 an der Tragstruktur 10 zugeordnet sind. Die Hinterschale 24 des Schalenprofils 16 ist demgegenüber an der Landeklappe 12 angebracht.

Zum Zwecke der Befestigung der Vorderschale 22 und/oder Hinterschale 24 sind je nach Ausgestaltung des Tragflügels 14 und der Landeklappe 12 diskrete oder kontinuierliche Beschläge oder dergleichen Befestigungselemente (im Einzelnen nicht dargestellt) vorgesehen. Alternativ oder kumulativ können die Beschläge oder dergleichen Befestigungselemente zusätzlich linienförmig und/oder flächig ausgebildet sein.

Um die fluid-/aerodynamische Form des Schalenprofils 16 nicht nachteilig zu beeinflussen, sind die Beschläge oder dergleichen Befestigungselemente in vorteilhafter Weise innerhalb des Raumes 18 untergebracht, der zur wenigstens teilweisen Aufnahme der Vorrichtung 20 zum Ein- bzw. Ausfahren der Landeklappe 12 vorgesehen ist.

Zugleich sind die Vorderschale 22 und die Hinterschale 24 des Schalenprofils 16 an die jeweils zugehörige Kontur des Tragflügels 14 bzw. der Landeklappe 12 angepasst, gegebenenfalls unter Verwendung von Dichtmanschetten (im Einzelnen ebenfalls nicht gezeigt). Davon bleiben die Funktionen der erfindungsgemäßen Tragstruktur 10 und der Landeklappe 12 unbeeinträchtigt.

Der Vorderschale 22 des Schalenprofils 16 kommt somit die Funktion zu, Fluid- bzw. Luftkräfte, die bei der vorliegenden Ausführungsform der erfindungsgemäßen Tragstruktur 10 auftreten und auf die Landeklappe 12 (ein-)wirken, aufzunehmen und in Form von Auflager-Reaktionskräften in den Tragflügel 14 sowie damit in das Flugzeug insgesamt (ein-)zuleiten. Die Hinterschale 24 des Schalenprofils 16 besitzt demgegenüber eine weitgehend rein strömungstechnische Funktion, ohne größere Kraftaufnahme, Krafteinleitung und Kraftübertragung.

Wie insbesondere den Fig. 1, 8 und 9 entnehmbar ist, sind die Vorderschale 22 und die Hinterschale 24 des Schalenprofils 16 an einer Trennlinie bzw. Trennfuge bzw. an Trennstellen 30 geteilt. Die Trennlinie 30 ist dabei derart gewählt, dass beim Ein- und Ausfahren der Landeklappe 12 eine Kollision zwischen der Vorderschale 22 und der Hinterschale 24 ausgeschlossen ist. Die Ausführung der Trennlinie 30 zwischen der Vorderschale 22 und der Hinterschale 24 des Schalenprofils 16 hängt im Wesentlichen von der Form der Landeklappe 12 selbst, den Stellungen und der Ausfahrkurve der Landeklappe 12 ab.

Die Vorderschale 22 und die Hinterschale 24 des außenseitigen fluid-/aerodynamisch geformten Schalenprofils 16 bilden zudem in eingefahrenem Zustand der Landeklappe 12 eine strömungstechnische Einheit ohne jeglichen zusätzlichen fluid-/aerodynamischen Widerstand. Die Vorderschale 22 und die Hinterschale 24 sind daher in dem Bereich, in dem sie miteinander in Kontakt sind, in Form, Querschnitt und Abmessung aufeinander angepasst ausgebildet, derart, dass die Vorderschale 22 und Hinterschale 24 in eingefahrenem Zustand der Landeklappe 12 bzw. in Reisekonfiguration dicht aneinander schließen bzw. ineinander eingreifen. Die fest mit dem Tragflügel 14 verbundene Vorderschale 22 des Schalenprofils 16 endet an der Trennlinie 30, wohingegen sich die Hinterschale 24 querschnittsgleich von der Trennlinie 30 fortgesetzt. Bei eingefahrener Landeklappe 12 ist daher kein unzulässiger Spalt zwischen der Vorderschale 22 und der Hinterschale 24 vorhanden. Die Trennlinie 30 zwischen der Vorderschale 22 und der Hinterschale 24 kann somit auch keinen zusätzlichen fluid-/aerodynamischen Strömungswiderstand induzieren.

Eine solche Trennung bzw. Teilung ermöglicht darüber hinaus auch negative Klappenwinkel am Ende des Einfahrvorganges/-weges (Einfahr-Overtravel), ohne dass es zu einer Kollision zwischen der erfindungsgemäßen Tragstruktur 10 und der Landeklappe 12 kommen kann.

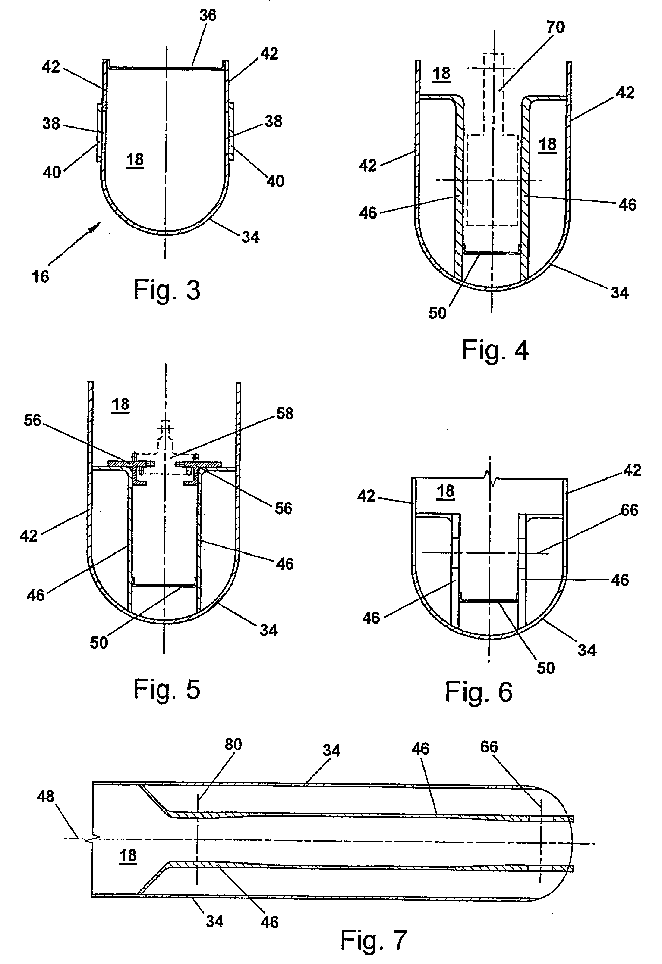

Bezugnehmend auf die Fig. 1 bis 3 bestehen die Vorderschale 22 und die Hinterschale 24 aus einer im Wesentlichen U.-förmig ausgebildeten Außenschale 34. Die Vorderschale 22 besitzt in ihrem vorderen Bereich 32 zusätzlich einen Abschlussdeckel 36 (Fig. 3).

Des Weiteren ist/sind die Vorderschale 22 und/oder die Hinterschale 24 des Schalenprofils 16 mit wenigstens einer Öffnung 38 versehen. Die Öffnung/en 38 ist/sind durch jeweils zugeordnete Deckel oder dergleichen Handlochdeckel 40 verschließbar. Bei der dargestellten Ausführungsform der erfindungsgemäßen Tragstruktur 10 sind entsprechend den Fig. 1 bis 3 zwei einander gegenüberliegende Öffnungen 38 im vorderen Bereich 32 der Vorderschale 22 vorgesehen. Damit ist ein Zugang in das Innere der Vorderschale 22 zu Inspektions-, Wartungs- und Reparaturzwecken geschaffen, die zum Beispiel an der mechanischen Architektur, welche in dem Raum 18 integriert ist, oder an Teilen davon vorzunehmen sind. Diese Öffnungen befinden sich, wie die Fig. 3 zeigt, in zwei Seitenwänden 42 der Außenschale 34 des Schalenprofils 16. Alternativ zu solchen Deckeln 40 können auch herkömmliche Wartungsklappen vorgesehen sein. Inspektion, Wartung und Reparatur lassen sich zusätzlich durch Entfernung der Hinterschale 24 des Schalenprofils 16 erleichtern.

Ohne im Einzelnen dargestellt zu sein, können in das Schalenprofil 16 zusätzlich mittig senkrechte und/oder waagrechte Stützwände eingebracht sein, um die Schadenstoleranz beim Stoß- und Schlagbeanspruchungen zu erhöhen.

Im hinteren Bereich 44 der Vorderschale 22 sind entsprechend der Fig. 1 und den Fig. 4 bis 7 weiterhin zwei vertikale Innenwände 46 angeordnet, die zueinander parallel verlaufen und sich in symmetrischer Weise seitlich versetzt zu der Längsachse 48 (Fig. 7) der Vorderschale 22 erstrecken. Entsprechend der Fig. 7 ragen dabei die beiden Innenwände 46 über die Trennlinie 30 zwischen der Vorderschale 22 und der Hinterschale 24 des Schalenprofils 16 hinaus.

Im hinteren Bereich 44 der Vorderschale 22 ist weiterhin, wie die Fig. 4 bis 6 zeigen, eine horizontal verlaufende Zwischenwand 50 vorgesehen, welche der Bildung eines Torsionskastens dient. Eine seitliche Anordnung von weiteren Zwischenwänden ist darüber hinaus ebenfalls möglich (nicht dargestellt).

Um eine ausfallsichere und schadenstolerante, zugleich sehr leichtgewichtige Ausgestaltung der erfindungsgemäßen Tragstruktur 10 zu erhalten, ist/sind die Vorderschale 22 und/oder die Hinterschale 24 des Schalenprofils 16 ein- oder mehrzellig ausgebildet, wobei die mehrzellige Bauweise in für den Fachmann naheliegender Weise die höhere Schadenstoleranz bietet. Eine solche Ausbildung lässt sich vorteilhafterweise insbesondere bei der Hinterschale 24 des Schalenprofils 16 realisieren, da diese, abgesehen vom Eigengewicht und Strömungskräften, kaum zusätzliche Lasten aufnehmen muss.

Dazu alternativ oder ebenso kumulativ kann/können die vorderschale 22 und/oder die Hinterschale 24 des Schalenprofils 16 durchgehend oder partiell, d.h. gegebenenfalls nur lokal, in Sandwich-Bauweise und/oder Verbund-Bauweise ausgestaltet sein.

In Abhängigkeit von speziellen Anforderungen, Verwendungsmöglichkeiten und besonderen Lastprofilen kann es darüber hinaus von Vorteil sein, die Vorderschale 22 und/oder die Hinterschale 24 des Schalenprofils 16 entweder freitragend oder mit geeigneten Aussteifungen (im Einzelnen ebenfalls nicht dargestellt), insbesondere Längs- und/oder Querversteifungen, beispielsweise in Form von Aufdickungen, Dopplern, Profilen, Rippen oder Spanten, zu versehen. Neben solchen Aussteifungen sind auch alternative Lastpfade zum Beispiel gegen Schäden durch Stoß- und Schlagbelastung denkbar.

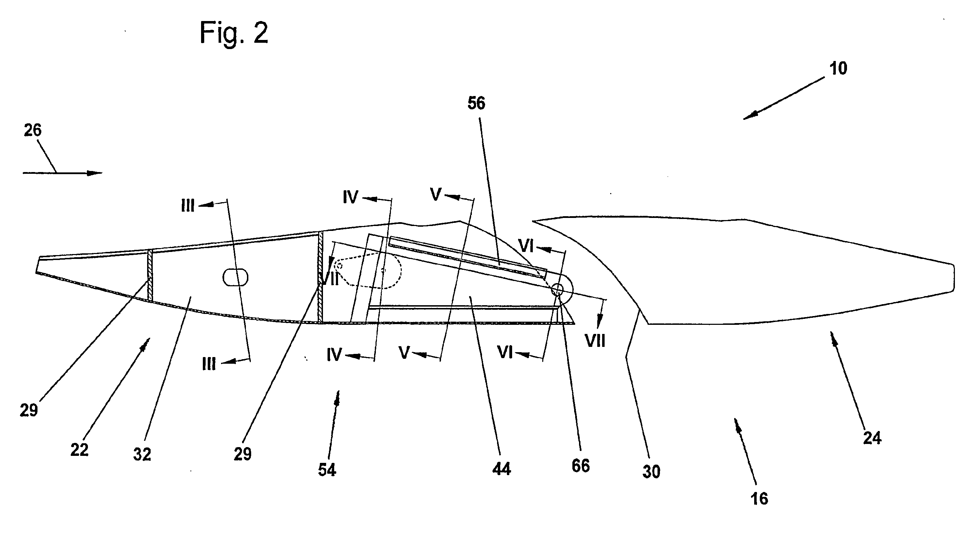

Wie aus den Fig. 1 und 2 weiterhin ersichtlich ist, umfasst die in dem Raum 18 des Schalenprofils 16 untergebrachte Vorrichtung 20 zum Ein- und Ausfahren der Landeklappe 12 eine kinematische Führungseinrichtung bzw. Kinematik 52 und wenigstens teilweise eine Antriebseinrichtung bzw. Aktuatorik 54.

Bei der in den Fig. 1 und 2 dargestellten Ausführungsform der erfindungsgemäßen Tragstruktur 10 weist die kinematische Führungseinrichtung bzw. Kinematik 52 eine der Vorderschale 22 zugeordnete Führungsschiene 56 und einen Rollenwagen 58 auf.

Wie sich der Fig. 5 entnehmen lässt, ist die Führungsschiene 52 bei der dargestellten Ausführungsform der erfindungsgemäßen Tragstruktur 10 zweiteilig ausgeführt und an den Innenwänden 46 der Vorderschale 22 befestigt. Ebenso ist jedoch auch eine einteilige oder dreiteilige Ausbildung der Führungsschiene 56 denkbar.

Der Rollenwagen 58 ist auf der Führungsschiene 56 hin- und herverfahrbar. Weiterhin umfasst die kinematische Führungseinrichtung bzw. Kinematik 52 ein Anschlusselement 60, das an der Landeklappe 12 fixiert ist und an dem Rollenwagen 58 angelenkt ist. Die Landeklappe 12 und die an der Landeklappe 12 befestigte Hinterschale 24 des Schalenprofils 16 sind somit über ein Drehlager 62 an dem Rollenwagen 58 drehbar aufgenommen.

Schließlich umfasst die kinematische Führungseinrichtung bzw. Kinematik 52 noch einen Steuerhebel 64, der jeweils mit der Vorderschale 22 und der Hinterschale 24 bzw. der Landeklappe 12 gelenkig verbunden ist. Insoweit ist der Steuerhebel 64 über das Drehlager 66 von der Vorderschale 22 und über das Drehlager 68 von der Landeklappe 12 drehbar aufgenommen. Entsprechend der Fig. 6 ist das Drehlager 66 des Steuerhebels 64, welches der Vorderschale 22 des Schalenprofils 16 zugeordnet ist, in die Innenwände 46 der Vorderschale 22 integriert.

Aus Gründen einer hohen Beanspruchung hat es sich in der Praxis als vorteilhaft erwiesen, die Längsführung der Landeklappe 12 verschleißfest auszuführen. Insoweit besteht die Führungsschiene 56, welche der Vorderschale 22 zugeordnet ist, aus Metall und insbesondere aus hochvergütetem Werkstoff nach zum Beispiel DIN 10083 oder aus einem verschleißfesten Stahl. In besonders vorteilhafter Weise ist die Führungsschiene 56 aus einer Titanlegierung ausgebildet.

Um darüber hinaus die Wartung und Reparatur der erfindungsgemäßen Tragstruktur 10 zu vereinfachen, ist die Führungsschiene 56, die der Vorderschale 22 zugeordnet ist, mit der Vorderschale 22 lösbar, zum Beispiel mittels Kraft- und/oder Formschluss, verbunden.

Wie ebenfalls aus den Fig. 1 und 2 hervorgeht, umfasst die Antriebseinrichtung bzw. Aktuatorik 54 bei der Ausführungsform der Tragstruktur 10 nach der Erfindung ein Antriebselement bzw. einen Aktuator 70 und eine Antriebsstange 72.

Entsprechend der Fig. 4 ist das Antriebselement bzw. der Aktuator 70 bei der gezeigten Ausführungsform der erfindungsgemäßen Tragstruktur 10 mittig zwischen den zwei Innenwänden 46 der Vorderschale 22 angeordnet.

Die Antriebsstange 72 ist jeweils mit dem Antriebselement bzw. Aktuator 70 und dem Anschlusselement 60 der Landeklappe 12 gelenkig verbunden. Insoweit ist die Antriebsstange 72 von einem Drehlager 74 an dem Antriebselement bzw. Aktuator 70 einerseits und von einem Drehlager 76 an dem Anschlusselement 60 andererseits drehbar aufgenommen. Da es bei der Ausführungsform der erfindungsgemäßen Tragstruktur 10 verhältnismäßig einfach ist, das Antriebselement bzw. den Aktuator 70 in dem Schalenprofil 16 beliebig, d.h. zum Beispiel mittig oder außermittig, zu plazieren, ist ein Antriebselement bzw. Aktuator 70 jedes gängigen Typs verwendbar. Dementsprechend lässt sich als Antriebselement bzw. Aktuator 70 beispielsweise ein Hydraulikzylinder, eine Stoßstange, ein Drehgetriebe, eine Gewindespindel oder auch eine Zahnstange in Abhängigkeit räumlicher Gegebenheiten und/oder technischer Anforderungen einsetzen.

Das Antriebselement bzw. der Aktuator 70 ist über ein Drehlager 80 von der Vorderschale 22 des Schalenprofils 16 drehbar aufgenommen.

Obschon sich die erfindungsgemäße Tragstruktur 10 dadurch auszeichnet, große Kräfte des Antriebselementes bzw. Aktuators 70 und daraus resultierende Reaktionskräfte aufnehmen zu können, ist es konstruktiv grundsätzlich möglich, das Antriebselement bzw. den Aktuator 70 der Antriebseinrichtung 54 auch außerhalb der erfindungsgemäßen Tragstruktur 10 zu installieren. Demnach ließe sich das Antriebselement bzw. der Aktuator 70 beispielsweise am Hinterholm 78 des von dem Fluid umströmten Tragflügels 14 des Flugzeuges oder jeder beliebigen sonstigen tragenden Struktur des Gegenstandes 14 lagern.

Für die Vorderschale 22 und die Hinterschale 24 des Schalenprofils 16 lassen sich gleiche oder auch unterschiedliche Werkstoffe wählen. Zur Gewichtsoptimierung der erfindungsgemäßen Tragstruktur 10 besteht/bestehen die Vorderschale 22 und/oder die Hinterschale 24 des Schalenprofils 16 jeweils vollständig oder teilweise aus Kunststoff, insbesondere faserverstärktem Kunststoff, und/oder metallischem Werkstoff, insbesondere Stahl, Aluminium oder einer Legierung daraus, und/oder einer Kombination daraus. Bei Faserverbundwerkstoffen bieten sich insbesondere diejenigen an, welche sich nach allgemein gängigen Fertigungsverfahren, wie Handlaminat, Prepreg, Harz-Infusion, Harz-Injektion inklusive geklebte bzw: gebolzte Fügungen, verarbeiten lassen. Bezüglich der metallischen Werkstoffe bieten sich diejenigen an, welche mittels Fertigungsverfahren wie Streckziehen von Blechen, Feinguss, Schweißen, Nieten und Kleben, herstellbar sind. Zusätzlich ist es im Schadensfall wichtig, dass Reparaturen ohne Demontage direkt am Gegenstand, d.h. im vorliegenden Ausführungsbeispiel unmittelbar am Flugzeug, möglich sind. Solche sogenannten In-Field-Repair-Arbeiten lassen sich bereits in aller Regel durch Auswahl gängiger Werkstoffe und Fertigungsverfahren wesentlich einfacher durchführen.

Zur Beherrschung elektrostatischer Aufladungen infolge Reibung oder Blitzschlag ist/sind die Vorderschale 22 und/oder die Hinterschale 24 des Schalenprofils 16 vorzugsweise mit einer elektrisch leitenden und/oder antistatisch wirkenden Beschichtung versehen. Bei Verwendung von Faserverbundwerkstoffen oder nicht-leitenden Materialien sollte eine solche Beschichtung, zum Beispiel Metall-Mesh oder Antistatiklack, aufgetragen werden. Alternativ oder kumulativ dazu ist/sind die Vorderschale 22 oder die Hinterschale 24 des Schalenprofils 16 mit einer gegen Stoß- und Schlagbelastungen unempfindlichen Beschichtung versehen.

Zur rechtzeitigen und zuverlässigen Erkennung von kritischen Schäden infolge eines Zusammenstoßes mit Fremdobjekten ist/sind die Vorderschale 22 und/oder die Hinterschale 24 des Schalenprofils 16 unter Umständen weiterhin mit einer Oberflächenveränderungen bzw. -beschädigungen sichtbar machenden Beschichtung versehen. Mittels Sichtkontrollen vor dem Start eines Flugzeuges sind auf diese Weise Veränderungen bzw. Beschädigungen der Oberflächenbeschaffenheit zu ermitteln. In diesem Zusammenhang ist auch der Einsatz einer zerstörungsfreien Werkstoffprüfung oder eines Health-Monitoring-Systems denkbar.

Ohne im Einzelnen dargestellt zu sein, zeichnet sich die Ausführungsform der erfindungsgemäßen Tragstruktur 10 schließlich noch dadurch aus, dass mindestens eine weitere Einrichtung, insbesondere ein Subsystem, wie ein Kraftstoff-Notablass (Jettison-System) oder eine Ram-Air-Turbine, innerhalb des Raumes 18 zur wenigstens teilweisen Aufnahme der Vorrichtung 20 zum Ein- und Ausfahren der Landeklappe 12 anordnenbar ist/sind. Damit lässt sich die Vielseitigkeit der erfindungsgemäßen Tragstruktur 10 noch weiter verbessern.

Die Funktionsweise der erfindungsgemäßen Tragstruktur 10 wird nachfolgend unter Bezugnahme auf die Fig. 1, 8 und 9 näher erläutert:

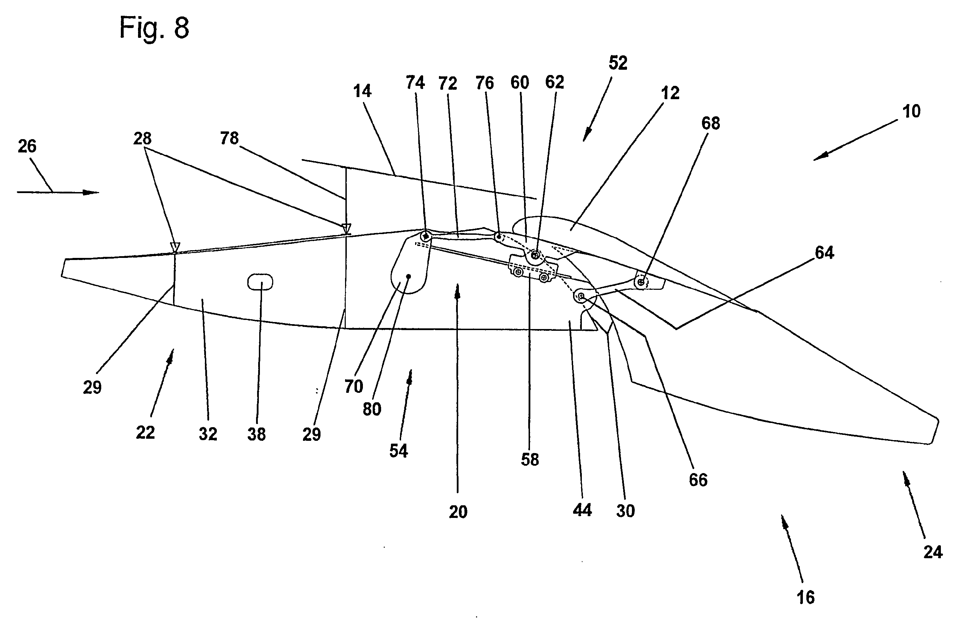

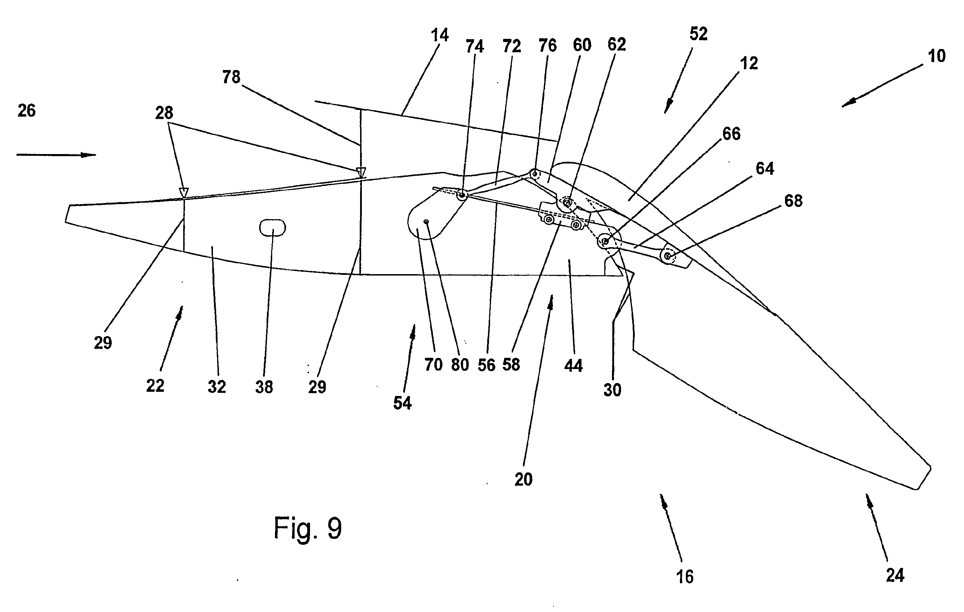

Durch Betätigung des Antriebselementes bzw. Aktuators 70 wird die Landeklappe 12 zwischen dem eingefahrenen Zustand bzw. der Reiseflugkonfiguration gemäß der Fig. 1, dem teilweise ausgefahrenen Zustand bzw. der Startkonfiguration gemäß der Fig. 8 und dem vollständig ausgefahrenen Zustand bzw. der Landekonfiguration gemäß der Fig. 9 bewegt. Jede beliebige Zwischenstellung ist dabei ebenso möglich.

Bei Betätigung des Antriebselementes bzw. Aktuators 70 im Uhrzeigersinn treibt die Antriebsstange 72 das Anschlusselement 60 und die Landeklappe 12 an und verfährt diese über die Führungsschiene 56 und den Rollenwagen 58 in Strömungsrichtung des Fluids gemäß Pfeil 26 bzw. entgegen der Start- bzw. Flugrichtung. Der Anstellwinkel der Landeklappe 12 stellt sich dabei in Funktion der Winkellage des Steuerhebels 64 ein. Bei Betätigung des Antriebselementes bzw. Aktuators 70 gegen den Uhrzeigersinn wird die Landeklappe 12 entsprechend eingefahren.

Die vorliegende Erfindung ist nicht auf die dargestellte Ausführungsform der Tragstruktur 10 beschränkt. So ist es ohne weiteres möglich, als kinematische Führungseinrichtung bzw. Kinematik 52 anstelle einer Linearführung über die Führungsschiene 56 und den Rollenwagen 58 eine Mehrgelenk-(Koppelstangen-)Kinematik oder eine Kombination aus beidem vorzusehen.

### Bezugszeichenliste

- 10: Tragstruktur
- 12: Klappe bzw. Lande- oder Hinterkantenklappe
- 14: Gegenstand bzw. Tragflügel eines Flugzeuges
- 16: Schalenprofil
- 18: Raum bzw. Volumen bzw. Bauraum
- 20: Vorrichtung zum Ein- und Ausfahren der Klappe
- 22: Vorderschale des Schalenprofils
- 24: Hinterschale des Schalenprofils
- 26: Strömungsrichtung des Fluids
- 28: Lagerungspunkte an dem Gegenstand bzw. Tragflügel
- 29: vordere und hintere Krafteinleitungsrippe
- 30: Trennlinie bzw. Trennstelle zwischen Vorderschale und Hinterschale
- 32: vorderer Bereich der Vorderschale
- 34: Außenschale
- 36: Abschlussdeckel
- 38: Öffnung/en
- 40: Deckel
- 42: Seitenwand
- 44: hinterer Bereich der Vorderschale
- 46: Innenwand der Vorderschale
- 48: Längsachse der Vorderschale
- 50: Zwischenwand der Vorderschale
- 52: kinematische Führungseinrichtung bzw. Kinematik
- 54: Antriebseinrichtung bzw. Aktuatorik
- 56: Führungsschiene
- 58: Rollenwagen
- 60: Anschlusselement
- 62: Drehlager
- 64: Steuerhebel
- 66: Drehlager
- 68: Drehlager
- 70: Antriebselement bzw. Aktuator
- 72: Antriebsstange
- 74: Drehlager
- 76: Drehlager
- 78: Hinterholm des Tragflügels des Flugzeuges
- 80: Drehlager.

## Patentansprüche

1. Tragstruktur für eine ein- und ausfahrbare Klappe (12), die einem Gegenstand (14) zugeordnet ist, welcher von einem Fluid umströmt ist, **dadurch gekennzeichnet, dass** die Tragstruktur (10) als Schalenprofil (16) ausgebildet ist, das mindestens einen Teil der auf die Klappe (12) wirkenden Kräfte aufnimmt und auf den Gegenstand (14) überträgt, das außenseitig eine fluid-/aerodynamisch widerstandsarme Form aufweist und das innenseitig einen Raum (18) zur wenigstens teilweisen Aufnahme einer Vorrichtung (20) zum Ein- und Ausfahren der Klappe (12) bildet.

2. Tragstruktur nach Anspruch 1, **dadurch gekennzeichnet, dass** das außenseitig fluid-/aerodynamisch geformte Schalenprofil (16) zweiteilig ausgebildet ist.

3. Tragstruktur nach Anspruch 1 oder 2, **dadurch gekennzeichnet, dass** das außenseitig fluid-/aerodynamisch geformte Schalenprofil (16) eine Vorderschale (22) und eine Hinterschale (24) umfasst, die gegen die Strömungsrichtung (26) des Fluids und hintereinander angeordnet sind.

4. Tragstruktur nach Anspruch 3, **dadurch gekennzeichnet, dass** die Vorderschale (22) und die Hinterschale (24) des außenseitig fluid-/aerodynamisch geformten Schalenprofils (16) in eingefahrenem Zustand der Klappe (12) eine strömungstechnische Einheit ohne jeglichen zusätzlichen fluid-/aerodynamischen Strömungswiderstand bilden.

5. Tragstruktur nach Anspruch 3 oder 4, **dadurch gekennzeichnet, dass** die Vorderschale (22) und die Hinterschale (24) des außenseitig fluid-/aerodynamisch geformten Schalenprofils (16) entsprechend dem ein- bzw. ausgefahrenen Zustand der Klappe (12) zueinander relativ bewegbar sind.

6. Tragstruktur nach einem der Ansprüche 3 bis 5, **dadurch gekennzeichnet, dass** die Vorderschale (22) des außenseitig fluid-/aerodynamisch geformten Schalenprofils (16) an dem Gegenstand (14) und die Hinterschale (24) dessen an der Klappe (12) befestigbar sind.

7. Tragstruktur nach Anspruch 6, **dadurch gekennzeichnet, dass** die Vorderschale (22) und/oder die Hinterschale (24) des außenseitig fluid-/aerodynamisch geformten Schalenprofils (16) über diskrete oder kontinuierliche Beschläge oder dergleichen Befestigungselemente an dem Gegenstand (14) bzw. an der Klappe (12) befestigbar ist/sind.

8. Tragstruktur nach Anspruch 6 oder 7, **dadurch gekennzeichnet, dass** die Vorderschale (22) und/oder die Hinterschale (24) des außenseitig fluid-/aerodynamisch geformten Schalenprofils (16) über linienförmig und/oder flächig ausgebildete Beschläge oder dergleichen Befestigungselemente an dem Gegenstand (14) bzw. an der Klappe (12) anbringbar ist/sind.

9. Tragstruktur nach Anspruch 7 oder 8, **dadurch gekennzeichnet, dass** die Beschläge oder dergleichen Befestigungselemente innerhalb des Raumes (18) zur wenigstens teilweisen Aufnahme der Vorrichtung (20) zum Ein- und Ausfahren der Klappe (12) angeordnet sind.

10. Tragstruktur nach einem der Ansprüche 3 bis 9, **dadurch gekennzeichnet, dass** die Vorderschale (22) und/oder die Hinterschale (24) des außenseitig fluid-/aerodynamisch geformten Schalenprofils (16) ein- oder mehrzellig ausgebildet ist/sind.

11. Tragstruktur nach einem der Ansprüche 3 bis 10, **dadurch gekennzeichnet, dass** die Vorderschale (22) und/oder die Hinterschale (24) des außenseitig fluid-/aerodynamisch geformten Schalenprofils (16) durchgehend oder partiell in Sandwich-Bauweise und/oder Verbund-Bauweise ausgebildet ist/sind.

12. Tragstruktur nach einem der Ansprüche 3 bis 11, **dadurch gekennzeichnet, dass** die Vorderschale (22) und/oder die Hinterschale (24) des außenseitig fluid-/aerodynamisch geformten Schalenprofils (16) mit Aussteifungen, insbesondere Längs- und/oder Querversteifungen, versehen ist/sind.

13. Tragstruktur nach Anspruch 12, **dadurch gekennzeichnet, dass** die Aussteifungen, insbesondere Längs- und/oder Querversteifungen, innerhalb des Raumes (18) zur wenigstens teilweisen Aufnahme der Vorrichtung (20) zum Ein- und Ausfahren der Klappe (12) angeordnet sind.

14. Tragstruktur nach einem der Ansprüche 3 bis 13, **dadurch gekennzeichnet, dass** die Vorderschale (22) und/oder die Hinterschale (24) des außenseitig fluid-/aerodynamisch geformten Schalenprofils (16) aus einer im Wesentlichen U-förmig ausgebildeten Außenschale (34) und von der Außenschale (34) aufgenommenen Seiten- (42) und/oder Innen- (46) und/oder Zwischenwänden (50) sowie gegebenenfalls einem Abschlussdeckel (36) gebildet ist/sind.

15. Tragstruktur nach einem der Ansprüche 3 bis 14, **dadurch gekennzeichnet, dass** die Vorderschale (22) und/oder die Hinterschale (24) des außenseitig fluid-/aerodynamisch geformten Schalenprofils (16) mit wenigstens einer durch einen Deckel (40) verschließbaren Öffnung (38) zu Inspektions-, Wartungs- und Reparaturzwecken versehen ist/sind.

16. Tragstruktur nach einem der Ansprüche 3 bis 15, **dadurch gekennzeichnet, dass** die Vorderschale (22) und/oder die Hinterschale (24) des außenseitig fluid-/aerodynamisch geformten Schalenprofils (16) jeweils vollständig oder teilweise aus Kunststoff, insbesondere faserverstärktem Kunststoff, und/oder Faserverbundwerkstoff und/oder metallischem Werkstoff, insbesondere Stahl, Titan, Aluminium oder einer Legierung daraus, und/oder einer Kombination daraus besteht/bestehen.

17. Tragstruktur nach einem der Ansprüche 3 bis 16, **dadurch gekennzeichnet dass** die Vorderschale (22) und/oder Hinterschale (24) des außenseitig fluid-/aerodynamisch geformten Schalenprofils (16) mit einer elektrisch leitenden und/oder antistatisch wirkenden Beschichtung versehen ist/sind.

18. Tragstruktur nach einem der Ansprüche 3 bis 17, **dadurch gekennzeichnet, dass** die Vorderschale (22) und/oder die Hinterschale (24) des außenseitig fluid-/aerodynamisch geformten Schalenprofils (16) mit einer gegen Stoß- und Schlagbelastungen unempfindlichen Beschichtung versehen ist/sind.

19. Tragstruktur nach einem der Ansprüche 3 bis 18, **dadurch gekennzeichnet, dass** die Vorderschale (22) und/oder die Hinterschale (24) des außenseitig fluid-/aerodynamisch geformten Schalenprofils (16) mit einer Oberflächenveränderungen bzw. -beschädigungen sichtbar machenden Beschichtung versehen ist/sind.

20. Tragstruktur nach einem der Ansprüche 1 bis 19, **dadurch gekennzeichnet, dass** eine in dem Raum (18) des außenseitig fluid-/aerodynamisch geformten Schalenprofils (16) untergebrachte Vorrichtung (20) zum Ein- und Ausfahren der Klappe (12) eine kinematische Führungseinrichtung (52) und wenigstens teilweise eine Antriebseinrichtung (54) umfasst.

21. Tragstruktur nach Anspruch 20, **dadurch gekennzeichnet, dass** die kinematische Führungseinrichtung (52) eine der Vorderschale (22) zugeordnete Führungsschiene (56) und einen auf der Führungsschiene (56) verfahrbaren Rollenwagen (58), ein an der Klappe (12) befestigbares und an dem Rollenwagen (58) angebrachtes Anschlusselement (60) sowie einen jeweils mit der Vorderschale (22) und der Klappe (12) gelenkig verbindbaren Steuerhebel (64) umfasst.

22. Tragstruktur nach Anspruch 21, **dadurch gekennzeichnet, dass** die der Vorderschale (22) zugeordnete Führungsschiene (56) mit der Vorderschale (22) lösbar verbunden ist.

23. Tragstruktur nach Anspruch 21 oder 22, **dadurch gekennzeichnet, dass** die der Vorderschale (22) zugeordnete Führungsschiene (56) mit der Vorderschale (22) kraft- und/oder formschlüssig verbunden ist.

24. Tragstruktur nach einem der Ansprüche 21 bis 23, **dadurch gekennzeichnet, dass** die der Vorderschale (22) zugeordnete Führungsschiene (56) aus Metall, insbesondere aus hochvergütetem Werkstoff oder verschleißfestem Stahl, vorzugsweise aus Titan oder einer Titanlegierung, ausgebildet ist.

25. Tragstruktur nach einem der Ansprüche 21 bis 24, **dadurch gekennzeichnet, dass** die Antriebseinrichtung (54) ein Antriebselement (70) und eine jeweils mit dem Antriebselement (70) und dem Anschlusselement (60) der Klappe (12) gelenkig verbindbare Antriebsstange (72) umfasst.

26. Tragstruktur nach Anspruch 25, **dadurch gekennzeichnet, dass** das Antriebselement (70) der Antriebseinrichtung (54) in der Vorderschale (22) des Schalenprofils (16) gelagert ist.

27. Tragstruktur nach Anspruch 25, **dadurch gekennzeichnet, dass** das Antriebselement (70) der Antriebseinrichtung (54) an dem von dem Fluid umströmten Gegenstand (14) lagerbar ist.

28. Tragstruktur nach einem der Ansprüche 1 bis 27, **dadurch gekennzeichnet, dass** mindestens eine weitere Einrichtung, insbesondere ein Kraftstoff-Notablass oder Jettison-System oder eine Ram-Air-Turbine, innerhalb des Raumes (18) zur wenigstens teilweisen Aufnahme der Vorrichtung (20) zum Ein- und Ausfahren der Klappe (12) installierbar ist/sind.

29. Verwendung einer Tragstruktur (10) nach einem der vorhergehenden Ansprüche für eine an einem Tragflügel (14) eines Flugzeuges angeordnete Landeklappe oder Hinterkantenklappe oder dergleichen Klappe eines U-Bootes, eines Luftkissenfahrzeuges oder Hovercraft, eines Fluggerätes der Luft- und Raumfahrt oder eines flexiblen Strömungsgleichrichters in einem Wasser-/Windkanal.

## Claims

1. Support structure for a retractable and extendable flap (12) associated with an object (14), surrounded by a flowing fluid, **characterized in that** the support structure (10) is formed as a shell profile (16) that takes at least part of the forces acting on the flap (26) and transmits them to the object (14), that has a fluid/aerodynamic low-drag form on the outer side and that on the inner side forms a chamber (18) for at least partially receiving a device (20) for retracting and extending the flap (12).

2. Support structure according to claim 1, **characterized in that** the shell profile (16), that has a fluid/aerodynamic form on the outer side, is of two-part construction.

3. Support structure according to claim 1 or 2, **characterized in that** the shell profile (16), that has a fluid/aerodynamic form on the outer side, comprises a front shell (22) and a rear shell (24) that are arranged one behind the other against the direction of flow (26) of the fluid.

4. Support structure according to claim 3, **characterized in that** the front shell (22) and the rear shell (24) of the shell profile (16), that has a fluid/aerodynamic form on the outer side, form a fluidic unit without any additional fluid/aerodynamic flow resistance when the flap (12) is retracted.

5. Support structure according to claim 3 or 4, **characterized in that** the front shell (22) and the rear shell (24) of the shell profile (16), that has a fluid/aerodynamic form on the outer side, can move relative to each other corresponding to the retracted or extended state of the flap (12).

6. Support structure according to one of claims 3 to 5, **characterized in that** the front shell (22) of the shell profile (16), that has a fluid/aerodynamic form on the outer side, can be attached to the object (14) and that the rear shell (24) can be attached to the flap (12).

7. Support structure according to claim 6, **characterized in that** the front shell (22) and/or the rear shell (24) of the shell profile (16), that has a fluid/aerodynamic form on the outer side, can be attached to the object (14) and/or the flap (12) by means of discrete or continuous fittings or similar attaching elements.

8. Support structure according to claim 6 or 7, **characterized in that** the front shell (22) and/or the rear shell (24) of the shell profile (16), that has a fluid/aerodynamic form on the outer side, can be mounted on the object (14) and/or on the flap (12) by means of fittings or similar attaching elements of linear form and/or flat design.

9. Support structure according to claim 7 or 8, **characterized in that** the fittings or similar attaching elements are arranged within the chamber (18) for at least partially receiving the device (20) for retracting and extending the flap (12).

10. Support structure according to one of claims 3 to 9, **characterized in that** the front shell (22) and/or the rear shell (24) of the shell profile (16), that has a fluid/aerodynamic form on the outer side, is/are of single- or multicell construction.

11. Support structure according to one of claims 3 to 10, **characterized in that** the front shell (22) and/or the rear shell (24) of the shell profile (16), that has a fluid/aerodynamic form on the outer side, is/are completely or partially of sandwich construction and/or composite construction.

12. Support structure according to one of claims 3 to 11, **characterized in that** the front shell (22) and/or the rear shell (24) of the shell profile (16), that has a fluid/aerodynamic form on the outer side, is/are provided with stiffeners, particularly longitudinal and/or transverse stiffeners.

13. Support structure according to claim 12, **characterized in that** the stiffeners, particularly the longitudinal and/or transverse stiffeners, are arranged within the chamber (18) for at least partially receiving the device (20) for retracting and extending the flap (12).

14. Support structure according to one of claims 3 to 13, **characterized in that** the front shell (22) and/or the rear shell (24) of the shell profile (16), that has a fluid/aerodynamic form on the outer side, is/are formed of an essentially U-shaped outer shell (34) and of side (42) and/or inner (46) and/or intermediate walls (50) contained by the outer shell (34) and also, if necessary, a closing cover (36).

15. Support structure according to one of claims 3 to 14, **characterized in that** the front shell (22) and/or the rear shell (24) of the shell profile (16), that has a fluid/aerodynamic form on the outer side, is/are provided with at least one opening (38), that can be covered by a cover (40), for inspection, servicing and repair purposes.

16. Support structure according to one of claims 3 to 15, **characterized in that** the front shell (22) and/or the rear shell (24) of the shell profile (16), that has a fluid/aerodynamic form on the outer side, each comprise/s completely or partially of plastic, particularly fiber-reinforced plastic, and/or fiber composite material and/or metal material, particularly steel, titanium, aluminum or an alloy of same, and/or a combination of these.

17. Support structure according to one of claims 3 to 16, **characterized in that** the front shell (22) and/or rear shell (24) of the shell profile (16), that has a fluid/aerodynamic form on the outer side, is/are provided with a coating that has an electrical conducting and/or antistatic effect.

18. Support structure according to one of claims 3 to 17, **characterized in that** the front shell (22) and/or the rear shell (24) of the shell profile (16), that has a fluid/aerodynamic form on the outer side, is/are provided with a coating that is resistant to shock and impact stresses.

19. Support structure according to one of claims 3 to 18, **characterized in that** the front shell (22) and/or the rear shell (24) of the shell profile (16), that has a fluid/aerodynamic form on the outer side, is/are provided with a coating that makes surface changes or damage visible.

20. Support structure according to one of claims 1 to 19, **characterized in that** a device (20) disposed in the chamber (18) of the shell profile (16), that has a fluid/aerodynamic form on the outer side, for extending and retracting the flap (12), comprises a kinematic guiding device, (52) and at least partially a driving device (54).

21. Support structure according to claim 20, **characterized in that** the kinematic guiding device (52) comprises a guide rail (56) associated with the front shell (22) and a roller carriage (58) that moves on the guide rail (56), a connecting element (60) that can be attached to the flap (12) and is attached to the roller carriage (58), and a control lever (64) that can be pivotably connected to the front shell (22) and the flap (12).

22. Support structure according to claim 21, **characterized in that** the guide rail (56) associated with the front shell (22) is detachably connected to the front shell (22).

23. Support structure according to claim 21 or 22, **characterized in that** the guide rail (56) associated with the front shell (22) is connected to the front rail by means of a mechanical or form fit.

24. Support structure according to one of claims 21 to 23, **characterized in that** the guide rail (56) associated with the front shell (22) is made of metal, particularly a high-quality material or wear-resistant steel, preferably of titanium or a titanium alloy.

25. Support structure according to one of claims 21 to 24, **characterized in that** the driving device (54) includes a driving element (70) and a drive rod (72) that can be pivotably connected to the driving element (70) and the connecting element (60) of the flap (12).

26. Support structure according to claim 25, **characterized in that** the driving element (70) of the driving device (54) is mounted in the front shell (22) of the shell profile (16).

27. Support structure according to claim 25, **characterized in that** the driving element (70) of the driving device (54) can be mounted on the object (14) surrounded by the flowing fluid.

28. Support structure according to one of claims 1 to 27, **characterized in that** at least one further device, in particular a fuel dumping or jettison system or a ram air turbine, can be installed within the chamber (18) to at least partially receive the device (20) for retracting and extending the flap (12).

29. Use of a support structure (10) according to one of the preceding claims for a landing flap or trailing-edge flap mounted on a wing (14) of an aircraft or a similar flap of a submarine, an air cushion vehicle or Hovercraft, an aerospace aircraft or a flexible flow guidance device in a water/wind tunnel.

## Revendications

1. Structure porteuse pour un volet rétractable et déployable (12), qui est associée à un objet (14) balayé par un fluide, **caractérisée en ce que** la structure porteuse (10) est réalisée sous forme de profil en coque (16) qui encaisse au moins une partie des forces agissant sur le volet (12) et qui les transfère à l'objet (14), qui est doté à l'extérieur d'une forme présentant peu de résistance en termes de dynamique des fluides et/ou d'aérodynamique, et qui définit à l'intérieur un espace (18) pour loger au moins partiellement un dispositif (20) pour la rétraction et le déploiement du volet (12).

2. Structure porteuse selon la revendication 1, **caractérisée en ce que** le profil en coque (16) doté à l'extérieur d'une forme en termes de dynamique des fluides et/ou d'aérodynamique est réalisé en deux parties.

3. Structure porteuse selon la revendication 1 ou 2, **caractérisée en ce que** le profil en coque (16) doté à l'extérieur d'une forme en termes de dynamique des fluides et/ou d'aérodynamique comprend une coque antérieure (22) et une coque postérieure (24) qui sont agencées à l'encontre de la direction d'écoulement (26) du fluide et l'une derrière l'autre.

4. Structure porteuse selon la revendication 3, **caractérisée en ce que** la coque antérieure (22) et la coque postérieure (24) du profil en coque (16) formé à l'extérieur en termes de dynamique des fluides et/ou d'aérodynamique forment dans la situation rétractée du volet (12) une unité vis-à-vis des écoulements sans résistance additionnelle quelconque en termes de dynamique des fluides et/ou d'aérodynamique.

5. Structure porteuse selon la revendication 3 ou 4, **caractérisée en ce que** la coque antérieure (22) et la coque postérieure (24) du profil en coque (16) formé à l'extérieur en termes de dynamique des fluides et/ou d'aérodynamique sont mobiles l'une par rapport à l'autre en fonction de la situation rétractée ou déployée du volet (12).

6. Structure porteuse selon l'une des revendications 3 à 5, **caractérisée en ce que** la coque antérieure (22) du profil en coque (16) formé à l'extérieur en termes de dynamique des fluides et/ou d'aérodynamique est susceptible d'être fixée sur l'objet (14) et sa coque postérieure (24) est susceptible d'être fixée sur le volet (12).

7. Structure porteuse selon la revendication 6, **caractérisée en ce que** la coque antérieure (22) et/ou la coque postérieure (24) du profil en coque (16) formé à l'extérieur en termes de dynamique des fluides et/ou d'aérodynamique est/sont susceptibles d'être fixées sur l'objet (14) ou respectivement sur le volet (12) via des ferrures discrètes ou continues ou des éléments de fixation analogues.

8. Structure porteuse selon la revendication 6 ou 7, **caractérisée en ce que** la coque antérieure (22) et/ou la coque postérieure (24) du profil en coque (16) formé à l'extérieur en termes de dynamique des fluides et/ou d'aérodynamique est/sont susceptibles d'être montées sur l'objet (14) ou respectivement sur le volet (12) via des ferrures de réalisation linéaire et/ou surfacique ou des éléments de fixation analogues.

9. Structure porteuse selon la revendication 7 ou 8, **caractérisée en ce que** les ferrures ou éléments de fixation analogues sont agencés à l'intérieur de l'espace (18) destiné à loger au moins partiellement le dispositif (20) pour la rétraction et le déploiement du volet (12).

10. Structure porteuse selon l'une des revendications 3 à 9, **caractérisée en ce que** la coque antérieure (22) et/ou la coque postérieure (24) du profil en coque (16) formé à l'extérieur en termes de dynamique des fluides et/ou d'aérodynamique est/sont formées d'une ou plusieurs cellules.

11. Structure porteuse selon l'une des revendications 3 à 10, **caractérisée en ce que** la coque antérieure (22) et/ou la coque postérieure (24) du profil en coque (16) formé à l'extérieur en termes de dynamique des fluides et/ou d'aérodynamique est/sont réalisées en totalité ou en partie en mode de construction en sandwich et/ou en mode de construction composite.

12. Structure porteuse selon l'une des revendications 3 à 11, **caractérisée en ce que** la coque antérieure (22) et/ou la coque postérieure (24) du profil en coque (16) formé à l'extérieur en termes de dynamique des fluides et/ou d'aérodynamique est/sont pourvues de rigidifications, en particulier de rigidifications longitudinales et/ou transversales.

13. Structure porteuse selon la revendication 12, **caractérisée en ce que** les rigidifications, en particulier les rigidifications longitudinales et/ou transversales sont agencées à l'intérieur de l'espace (18) destiné à loger au moins partiellement le dispositif (20) pour la rétraction et le déploiement du volet (12).

14. Structure porteuse selon l'une des revendications 3 à 13, **caractérisée en ce que** la coque antérieure (22) et/ou la coque postérieure (24) du profil en coque (16) formé à l'extérieur en termes de dynamique des fluides et/ou d'aérodynamique est/sont formées par une coque extérieure (34) réalisée essentiellement en forme de U et par des parois latérales (42) et/ou intérieures (46) et/ou intermédiaires (50) logées dans la coque extérieure (34), ainsi que le cas échéant par un couvercle terminal (36).

15. Structure porteuse selon l'une des revendications 3 à 14, **caractérisée en ce que** la coque antérieure (22) et/ou la coque postérieure (24) du profil en coque (16) formé à l'extérieur en termes de dynamique des fluides et/ou d'aérodynamique est/sont pourvues d'au moins une ouverture (38) capable d'être obturée par un couvercle (40), à des fins d'inspection, d'entretien et de réparation.

16. Structure porteuse selon l'une des revendications 3 à 15, **caractérisée en ce que** la coque antérieure (22) et/ou la coque postérieure (24) du profil en coque (16) formé à l'extérieur en termes de dynamique des fluides et/ou d'aérodynamique est/sont respectivement réalisées en totalité ou en partie en matière plastique, en particulier en matière plastique renforcée par des fibres et/ou en matériaux composites fibreux et/ou en matériaux métalliques, en particulier acier, titane, aluminium ou un alliage de ces métaux, et/ou une combinaison de ces matériaux.

17. Structure porteuse selon l'une des revendications 3 à 16, **caractérisée en ce que** la coque antérieure (22) et/ou la coque postérieure (24) du profil en coque (16) formé à l'extérieur en termes de dynamique des fluides et/ou d'aérodynamique est/sont pourvues d'un revêtement électriquement conducteur et/ou à effet antistatique.

18. Structure porteuse selon l'une des revendications 3 à 17, **caractérisée en ce que** la coque antérieure (22) et/ou la coque postérieure (24) du profil en coque (16) formé à l'extérieur en termes de dynamique des fluides et/ou d'aérodynamique est/sont pourvues d'un revêtement insensible vis-à-vis des chocs et des coups.

19. Structure porteuse selon l'une des revendications 3 à 18, **caractérisée en ce que** la coque antérieure (22) et/ou la coque postérieure (24) du profil en coque (16) formé à l'extérieur en termes de dynamique des fluides et/ou d'aérodynamique est/sont pourvues d'un revêtement qui rend visibles des modifications ou des endommagements de surface.

20. Structure porteuse selon l'une des revendications 1 à 19, **caractérisée en ce qu'**un dispositif (20), logé dans l'espace (18) du profil en coque (16) formé à l'extérieur en termes de dynamique des fluides et/ou d'aérodynamique et destiné à la rétraction et au déploiement du volet (12), comprend un système de guidage cinématique (52) et au moins partiellement un système d'entraînement (54).

21. Structure porteuse selon la revendication 20, **caractérisée en ce que** le système de guidage cinématique (52) comprend un rail de guidage associé à la coque antérieure (22) et un chariot à rouleaux (58) déplaçable sur le rail de guidage (56), un élément de raccordement (60) susceptible d'être fixé au volet (12) et monté sur le chariot à rouleaux (58), et un levier de commande (64) susceptible d'être relié de façon articulée respectivement à la coque antérieure (22) et au volet (12).

22. Structure porteuse selon la revendication 21, **caractérisée en ce que** le rail de guidage (56) associé à la coque antérieure (22) est relié de façon détachable à la coque antérieure (22).

23. Structure porteuse selon la revendication 21 ou 22, **caractérisée en ce que** le rail de guidage (56) associé à la coque antérieure (22) est relié à la coque antérieure (22) par coopération de forces et/ou par coopération de formes.

24. Structure porteuse selon l'une des revendications 21 à 23, **caractérisée en ce que** le rail de guidage (56) associé à la coque antérieure (22) est réalisé en métal, en particulier en matériau de haute qualité ou en acier résistant à l'usure, de préférence en titane ou en alliage de titane.

25. Structure porteuse selon l'une des revendications 21 à 24, **caractérisée en ce que** le système d'entraînement (54) comprend un élément d'entraînement (70) et une tige d'entraînement (72) susceptible d'être reliée de façon articulée respectivement à l'élément d'entraînement (70) et à l'élément de raccordement (60) du volet (12).

26. Structure porteuse selon la revendication 25, **caractérisée en ce que** l'élément d'entraînement (70) du système d'entraînement (54) est monté dans la coque antérieure (22) du profil en coque (16).

27. Structure porteuse selon la revendication 25, **caractérisée en ce que** l'élément d'entraînement (70) du système d'entraînement (54) est susceptible d'être monté sur l'objet (14) léché par le fluide.

28. Structure porteuse selon l'une des revendications 1 à 27, **caractérisée en ce qu'**au moins un autre système, en particulier un système d'évacuation de carburant en secours ou un système "Jettison" ou une turbine "Ram-Air", est/sont susceptibles d'être installés à l'intérieur de l'espace (18) destiné à loger au moins partiellement le dispositif (20) pour la rétraction et le déploiement du volet (12).

29. Utilisation d'une structure porteuse (10) selon l'une des revendications précédentes pour un volet d'atterrissage agencé sur l'aile portante (14) d'un avion ou pour un volet de queue ou similaire dans un sous-marin, un véhicule à coussin d'air ou "Hovercraft", un engin volant aéronautique ou aérospatial, ou un redresseur d'écoulement flexible dans un canal destiné à l'eau ou au vent.
